# EUROPÄISCHE PATENTANMELDUNG

(11) **EP 2 325 053 A1**
(43) Veröffentlichungstag der Anmeldung: **25.05.2011**
(21) Anmeldenummer: 10466028.7
(22) Anmeldetag: 15.11.2010
(51) Int. Cl.: B60R 13/02

(54) **Dachhimmel eines Fahrzeugs**

(30) Priorität: 18.11.2009 CZ 20090766
(71) Anmelder: Skoda Auto A.S., 293 60 Mladá Boleslav (CZ)
(72) Erfinder: Budinsky, Marek, 78832 Staré Mesto pod Sneznikem (CZ)

(57) **Zusammenfassung**

Der an der Karosserieinnenseite befestigte Dachhimmel (1) eines Fahrzeugs bestehend aus mindestens zwei separaten, selbsttragenden Teilen (2, 3, 4), die zerlegbar an der Karosserieinnenseite befestigt sind. Jeder dieser Teile (2, 3, 4) kann aus dem Dachteil der Karosserie separat ausgebaut oder in den Dachteil eingebaut werden. Der Dachhimmel (1) ist als Zusammenbau ausgebildet, bestehend aus einem Mittelteil (3) und zwei spiegelbildlich identischen Seitenteilen (2, 4). Diese Teile (2, 3, 4) sind zerlegbar an die Karosserieinnenseite befestigt und Trennlinien (5, 5') bilden, die längs in der Fahrzeugfahrtrichtung verlaufen. An der Stelle der Trennlinien (5, 5') sind an den Teilen (2, 3 und 4) des Dachhimmels (1) Säume ausgebildet (13, 13'), welche die Kanten (14, 14') umfassen. Die Kante (14) des Saumes (13) zusammen mit der Kante (14') des gegenüberliegenden Saums (13') bilden eine von der Sichtseite sichtbare durchgehende Fuge (15).

## Beschreibung

### Technisches Gebiet

Die Erfindung betrifft einen aus mehreren Teilen bestehenden Dachhimmel, der ausbaubar im Fahrzeuginnenraum am Dachteil der Fahrzeugkarosserie befestigt ist.

### Bisheriger Stand der Technik

Fahrzeugdesign und -konstruktion sollten so entworfen sein, damit das Herausnehmen und Einlegen eines einteiligen Dachhimmels beim Fahrzeug mit eingebauter Frontscheibe auch über andere Öffnung beschädigungslos ermöglicht wird und zwar durch die Öffnung der Heckklappe oder der vorderen bzw. hinteren Seitentüren. Aus Konstruktionsgründen kann solche Bedingung unerfüllt bleiben und die Frontscheibe ausgebaut werden muss. Dies geschieht bei den Nacharbeiten während der Fahrzeugfertigung, wo der Dachhimmel aus dem Fahrzeug ausgebaut und herausgenommen und nach Beendigung der Reparatur der Dachhimmel wieder ins Fahrzeug eingelegt und eingebaut werden muss (wegen der Beschädigung des Dachhimmels, des Zugriffs aus dem Fahrzeuginnenraum zu den durch den Dachhimmel abgedeckten Komponenten, wie z.B. Antenne, Innenleuchte usw.) oder bei Reparaturen, die im Feld aus gleichen Gründen in gleicher Weise vorgenommen werden.

Da die Frontscheibe jedoch ein Sicherheitselement des Fahrzeuges darstellt, kann man sie nach dem Ausbau aus dem Fahrzeug nicht wieder einbauen, sondern eine neue Scheibe verwendet werden muss. Solche Vorgehensweise verlängert deutlich die Zeit für den Austausch des Dachhimmels und verteuert den ganzen Arbeitsschritt (zum Ausbau und Einbau der Frontscheibe muss der Preis der neuen Scheibe angerechnet werden).

Im Dokument DE102007008557 ist ein mehrteiliger Dachhimmel beschrieben. Die Lösung enthält zwar den Entwurf eines mehrteiligen Dachhimmels, jedoch die einzelnen Teile werden zusammengeklebt und so entsteht eine einteilige, nicht zerlegbare Einheit. Die gegenseitige Verbindung dieser Bestandteile erfolgt im Herstellungsprozess, wobei das Wesen des mehrteiligen Dachhimmels auf den Zeitraum vor der Verbindung noch bei der Anfertigung beschränkt wird.

Andere Lösung ist in DE19959543 beschrieben. Die Aufgabe hierbei ist, einen Fahrzeugdachhimmel zu schaffen, bei dem das Biegen oder Knicken der Teile des Dachhimmels ohne wesentlicher Ausdehnung oder Beschädigung der Deckschicht des Dachhimmels ermöglicht wird. Dieser Dachhimmel weist deshalb an gewünschten Stellen ausgestaltete Bruchlinien auf, an denen die seitlichen Dachhimmelteile umgeklappt oder umgelegt werden. Der Fahrzeugdachhimmel weist eine obere Basisstruktur auf, zu der in der Montagestellung der Dachmodul zugewandt ist. Diese Basisstruktur besteht aus einer Schaumschicht und einer aus Glasfasern gebildeten Ober- und Unterschicht, die auf der Schaumschicht sandwichartig angeordnet sind und so eine harte, feste und weitestgehend unbiegsame Struktur bilden. Der Fahrzeugdachhimmel weist auch seine dem Fahrgastraum zugewandte Unterseite, die in der Basisstruktur auch die Schaumunterlage umfasst. Der Dachhimmel ist als eine Innenraumverkleidung des Fahrzeugdaches ausgestaltet und weist zwei ausgewölbte Bereiche am vorderen und hinteren Ende quer über dem Himmel auf. Der vordere ausgewölbte Bereich dient zur Aufnahme von Sonnenblenden und der hintere ausgewölbte Bereich dient als Raum für die Kopffreiheit der Fahrzeuginsassen. Während der Montage, bei der der Dachmodul von oben in das Fahrzeugdach eingesetzt werden soll, sind beide Randbereiche des Dachhimmels biegsam oder klappbar. Diese Randbereiche des Dachhimmels sind wegen des Einsatzes in den Dachrahmen ausgestaltet, da die Öffnung des Dachrahmens kleiner als der Dachhimmel ist. Zu diesem Zweck enthält der Dachhimmel zwei längsverlaufende Bruchlinien, an denen die entsprechenden Randbereiche nach unten abklappbar sind. Die Bruchlinien sind als Sicken in der oberen Basisstruktur ausgebildet, welche die obere Glasfaserschicht und Schaumschicht durchdringt, nicht jedoch die untere Glasfaserschicht. Aus dem oben genannten geht hervor, dass der Himmel geknickt wird und zusammen bleibt, d.h. die einzelnen Randbereiche vom Mittelteil des Himmels untrennbar sind und der Himmel also als einteilige Einheit ausgebildet ist. Dies erscheint bei einer Beschädigung eines Teils des Himmels als Nachteil, da der ganze Dachhimmel und nicht nur der beschädigte Dachhimmelteil ausgetauscht werden muss.

### Darstellung der Erfindung

Die Aufgabe wird durch den am inneren Dachteil der Fahrzeugkarosserie befestigten Fahrzeugdachhimmel gelöst. Die Darstellung der Erfindung liegt darin, dass der Dachhimmel aus mindestens zwei separaten, an die Karosserieinnenseite durch umliegende Einbauteile befestigten Teilen besteht.

Der Dachhimmel kann in vorteilhafter Ausführung aus einem Mittelteil und zwei spiegelbildlich identischen Seitenteilen bestehen. Diese Teile sind an der Innenseite der Karosserie durch umliegende Einbauteile befestigt und die Trennlinie dieser Teile längs zur Fahrtrichtung verläuft. Jeder dieser Teile kann separat ein- und ausgebaut werden.

An, der Trennstelle ist an jedem Teil ein Saum ausgebildet, dessen Kante zusammen mit der Kante des gegenüberliegenden Saums des weiteren Teils eine durchgehende, von der Sichtseite im Fahrzeuginnenraum sichtbare Fuge bildet.

### Übersicht der Figuren der Zeichnungen

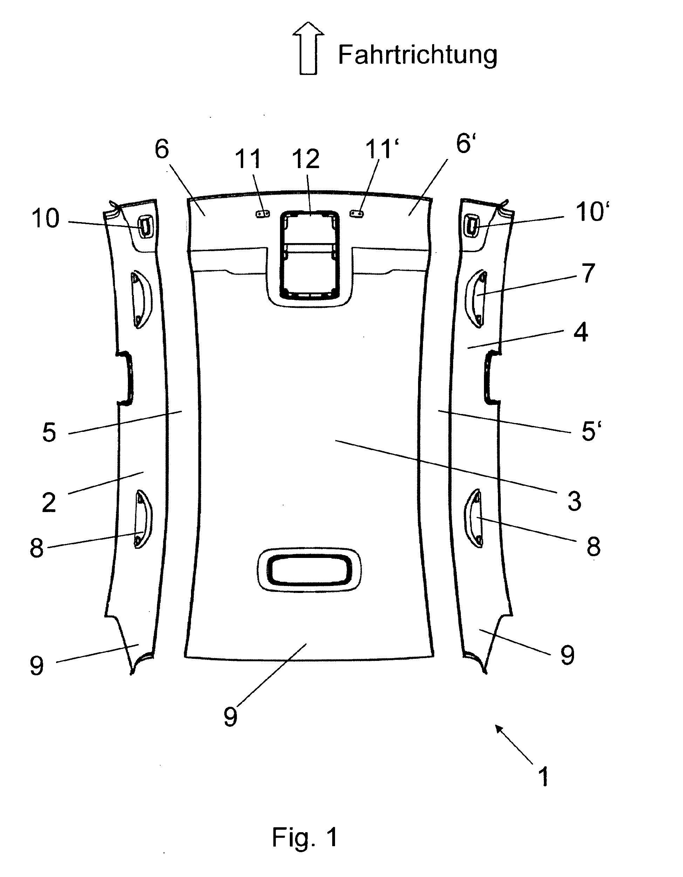

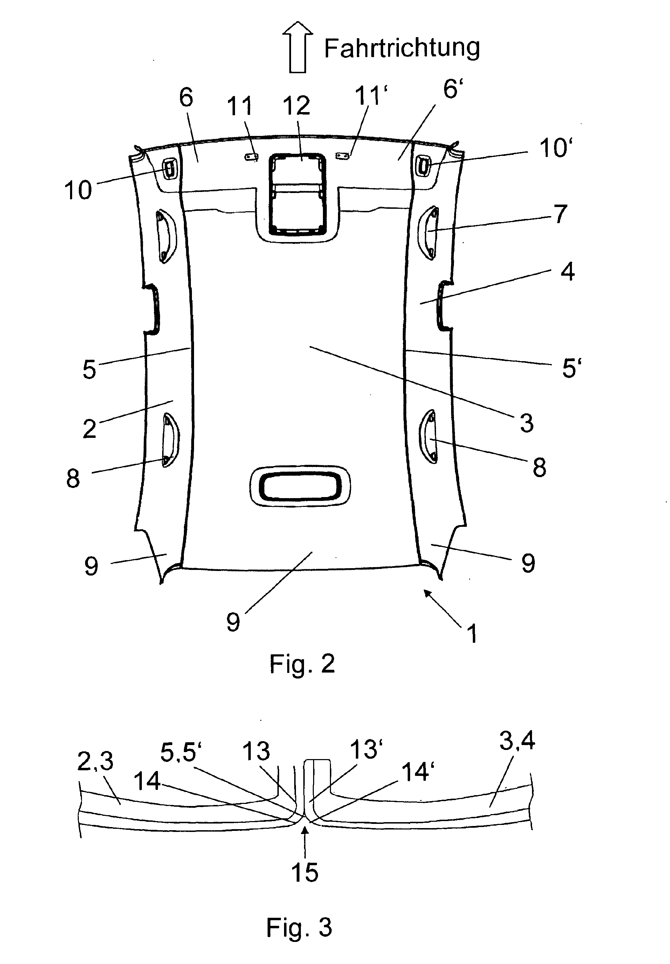

In der Fig. 1 ist der Dachhimmel mit getrennten Einzelteilen, in Fig. 2 der Dachhimmel in zusammengebautem Zustand und in Fig. 3 die durchgehende Fuge der anliegenden Teile des Dachhimmels in einer Queransicht dargestellt.

### Ausführungsbeispiel der Erfindung

Üblicher Dachhimmel, in der Regel als einteilig ausgestaltet, ist im Karosserieinnenraum durch umliegende Einbauteile befestigt (die Sonnenblenden, der Rahmen der vorderen Mittelleuchte, die Dachgriffe, der Clip oder ähnliches Befestigungselement, z.B. Dual Lock, bzw. Klettverschluss im hinteren Bereich). Der Dachhimmel ist seitlich und im hinteren Bereich in die Dichtung eingezogen und vorne, seitlich und hinten knüpfen die oberen Säulenverkleidungen an. Bei der Fahrzeugvariante mit Ausstell- bzw. Schiebedach kann der Dachhimmel auch eben im Bereich der Anbindung des Dachhimmels an den Ausstell-/Schiebedach befestigt werden.

Der an die Karosserieinnenseite durch Einbauteile befestigte Dachhimmel 1 wird, gemäß Fig. 1 und 2, längs zur Fahrtrichtung in drei Teile und zwar in zwei seitliche, spiegelbildlich identische Teile 2 und 4 und einen Mittelteil 3 aufgeteilt. Die Trennlinien 5, 5' zwischen diesen einzelnen Teilen 2, 3 und 4 werden im Bereich des Einbaues der Sonnenblenden 6, 6' geführt und verlaufen über die Dachgriffe 7, 8 bis zum hinteren Teil 9 das Dachhimmels 1.

Nach der Aufteilung des Dachhimmels 1 können alle seine drei Teile 2, 3 und 4 als separate, selbsttragende und unabhängige, evtl. auch getrennt ein- oder ausbaubare Teile angesehen werden. Die Seitenteile 2 und 4 sind an der Karosserieinnenseite im Bereich der Dachgriffe 7, 8 über die Außenlager 10, 10' der Sonnenblenden 6, 6', eventuell auch im hinteren Bereich 9 mit einem Clip oder anderem Element (nicht dargestellt) befestigt. Der Mittelteil 3 ist mit den Innenlager 11, 11' der Sonnenblenden 6, 6', dem Rahmen 12 der vorderen Mittelleuchte und im hinteren Bereich 9 mit einem Clip oder anderem Element (nicht dargestellt) befestigt. Bei einer Fahrzeugvariante mit einem Dachfenster kann der Mittelteil 3 im Anbindungsbereich an das Dachfenstermodul (nicht dargestellt) befestigt werden. Die Teile 2, 3 und 4 des Dachhimmels 1 sind konstruktiv so ausgestaltet, damit sie separat hergestellt werden können.

Die Aufteilung des Dachhimmels 1 gehört nicht zum Fertigungsprozess dieses Teiles, sondern die Fertigung jedes Teils erfolgt separat.

An der Stelle der Trennlinien 5, 5', gem. Fig. 3, sind an den Teilen 2, 3 und 4 des Dachhimmels 1 die Säume 13, 13' ausgebildet (Biegewinkel beträgt 90°), welche die Kanten 14, 14' umfassen. Die Kante 14 des Saumes 13 zusammen mit der Kante 14' des gegenüberliegenden Saumes 13' bilden eine von der Sichtseite sichtbare durchgehende Fuge 15. Der Saum 13 ist entlang der ganzen Länge der Teile 2, 3 und 4 ausgebildet und seine konstante Höhe wird so gewählt, damit bei der Verbindung der Teile 2 und 3, und auch 3 und 4, diese im gegenseitigen und engen Kontakt sind, womit der Entstehung von möglichen optischen Fehler, z.B. ungleichmäßige Fugen, sichtbare Kanten des Teiles, Fugen mit Durchsichtmöglichkeit usw. vorgebeugt wird.

Der im Karosserieinnenraum mit umliegenden Einbauteilen befestigte Dachhimmel kann variabel nur auf zwei, für Fahrzeugein- und -ausbau geeignet dimensionierte Teile aufgeteilt werden. Die Aufteilung auf zwei Teile kann ähnlich wie bei dem oben angeführten Beispiel vorgenommen werden, nur mit dem Unterschied, dass es nur eine Trennlinie geben wird und diese ähnlich längs zur Fahrzeugfahrtrichtung oder in anderer Richtung ausgeführt werden kann. Nach Konstruktions- und Einbauanforderungen kann der Dachhimmel anderseits variabel auf vier oder mehrere Teile aufgeteilt werden. Ähnlich variabel können auch die Trennlinien und zwar entsprechend der unterschiedlichen Anzahl und unterschiedlichen Richtungen ausgeführt werden.

Wesentlicher und grundsätzlicher Vorteil der neuen Lösung ist die Zerlegbarkeit des mehrteiligen Dachhimmels. Alle Teile des Bauteils können getrennt als separate, selbsttragende und unabhängige Teile angesehen werden. Die Verbindung bzw. Zerlegung kann während des Ein-/Ausbauprozesses durchgeführt werden und zwar wiederholbar ohne Beschädigung einzelner Teile. Diese Teile können verschieden kombiniert und ausgetauscht werden, eventuell nur einige von ihnen.

Weiter besteht hier die vorteilhafte Möglichkeit eventueller farblicher Differenzierung, evtl. die Möglichkeit, spezifische Teile mit Rücksicht auf die entsprechende Ausstattungsstufe des Fahrzeuges (volles Dach oder mit Dachfenster) zu kombinieren.

### Industrielle Nutzbarkeit

Erfindungsgemäßer mehrteiliger Dachhimmel eines Fahrzeugs kann bei allen Automobilen eingesetzt werden, insbesondere dann bei Personenkraftfahrzeugen, wo die konstruktiven Möglichkeiten die Herausnahme eines ungeteilten Dachhimmels über die Heckklappe oder Seitentüren ohne notwendigen Ausbau der Fahrzeugfrontscheibe nicht erlauben.

Verwendete Bezeichnungen
- 1: Dachhimmel eines Fahrzeugs
- 2: Seitenteil des Dachhimmels
- 3: Mittelteil des Dachhimmels
- 4: Seitenteil des Dachhimmels
- 5, 5': Trennlinien einzelner Teile des Dachhimmels
- 6, 6': Sonnenblende
- 7: Dachgriff vorne
- 8: Dachgriff hinten
- 9: Hinterteil des Dachhimmels
- 10, 10': Außenlager der Sonnenblenden
- 11, 11': Innenlager der Sonnenblenden
- 12: Rahmen der vorderen Mittelleuchte
- 13, 13': Saum des Teils des Dachhimmels
- 14, 14': Saumkante
- 15: Durchgehende Fuge

## Patentansprüche

1. Der Dachhimmel (1) eines Fahrzeugs, der zum Dachteil der Karosserieinnenseite befestigt ist und zur Trennung des Fahrgastraumes vom Dachteil der eigentlichen Fahrzeugkarosserie dient, **dadurch gekennzeichnet, dass** der Dachhimmel (1) mindestens zwei separate, selbsttragende Teile (2, 3, 4) aufweist, die zerlegbar an der Karosserieinnenseite befestigt sind, wobei jeder dieser Teile (2, 3, 4) separat aus dem Dachteil der Karosserie ausgebaut oder in den Dachteil eingebaut werden kann.

2. Der Dachhimmel (1) nach Anspruch 1 **dadurch gekennzeichnet, dass** er durch einen Mittelteil (3) und zwei spiegelbildlich identischen Seitenteile (2, 4) gebildet wird, die zerlegbar an die Karosserieinnenseite befestigt sind, wobei jeder dieser Teile (2, 3, 4) separat aus dem Dachteil der Karosserie ausgebaut oder in den Dachteil eingebaut werden kann, wobei die Trennlinien (5, 5') dieser Teile (2, 3, 4) längs zur Fahrzeugfahrtrichtung verlaufen.

3. Der Dachhimmel (1) nach vorherigen Ansprüchen **dadurch gekennzeichnet, dass** an der Stelle der Trennlinie (5, 5') der einzelnen Teile (2, 3, 4) des Dachhimmels (1) an jedem Teil (2, 3, 4) ein Saum (13, 13') ausgebildet ist, wobei die Kante (14) des Saums (13) eines Teiles (2, 3, 4) zusammen mit der Kante (14') des gegenüberliegenden Saums (13') eines der weiteren Teile (2, 3, 4) eine durchgehende Fuge (15) bildet, die von der Sichtseite des Fahrzeuginnenraumes sichtbar ist.
